# EUROPÄISCHE PATENTSCHRIFT

(11) **EP 2 007 022 B1**
(45) Veröffentlichungstag und Bekanntmachung des Hinweises auf die Patenterteilung: **12.05.2010**
(21) Anmeldenummer: 07110894.8
(22) Anmeldetag: 22.06.2007
(51) Int. Cl.: H04B 1/713, G07C 9/00, G08C 17/02

(54) **Funkverfahren für Tore**
Wireless method for gates
Procédé radio pour portails

(43) Veröffentlichungstag der Anmeldung: 24.12.2008
(60) Teilanmeldung: 09007808.0
(73) Patentinhaber: Feig Electronic GmbH, 35781 Weilburg-Waldhausen (DE)
(72) Erfinder: Sikora, Axel, Prof., 79423 Heitersheim (DE); Walk, Eldor, 65558 Heistenbach (DE)
(74) Vertreter: Knefel, Cordula

(56) Entgegenhaltungen:
- EP-A- 1 686 699
- WO-A-03/056530
- US-A1- 2002 183 008
- US-A1- 2006 109 079

## Beschreibung

Die Erfindung betrifft ein Funkverfahren für Tore.

An ein Funkverfahren für Tore werden eine Vielzahl unterschiedlicher Anforderungen gestellt, insbesondere, wenn einzelne Komponenten, die das Funkverfahren ausführen, mit einer Batterie betrieben werden.

Um eine lange Lebensdauer der Batterie zu gewährleisten, ist eine Anforderung an ein Funkverfahren für Tore, dass das Funkverfahren einen nur geringen Energiebedarf haben darf.

Da es bei batteriebetriebenen Komponenten üblich ist, diese Komponenten nur im Bedarfsfall zu aktivieren, muss ein Funkverfahren für Tore in der Lage sein, nach dem Aktivieren schnell und zuverlässig eine Verbindung zwischen der batteriebetriebenen Komponente und der stationären Torsteuerung aufzubauen, wobei sichergestellt sein muss, dass ein Verbindungsaufbau ausschließlich zwischen der stationären Torsteuerung und den ihr zugeordneten mobilen Einheiten erfolgt und nicht mit Komponenten, die sich zufällig auch in ihrem Funk-Erfassungsbereich befinden, wie dies beispielsweise mobile Einheiten einer in der Nähe befindlichen Torsteuerung sein könnten oder andere zufällig in der Nähe befindliche Funksysteme, wie beispielsweise Mobiltelefone oder mobile Computersysteme mit WLAN- oder Bluetooth-Sender-/Empfängersystemen.

Da mit einem Funkverfahren für Tore auch sicherheitsrelevante Daten wie beispielsweise das Erkennen eines Hindernisses im Bereich des Tores übertragen werden können, muss der Datenaustausch schnell stattfinden können und gegen Störungen aus der Umgebung, beispielsweise durch andere Funksysteme weitgehend immun sein.

Um den sicheren Betrieb eines Tores zu gewährleisten, insbesondere wenn es sich bei dem Tor um ein Schnelllauftor handelt, welches sich mit beispielsweise 1 bis 2 Metern pro Sekunde bewegt, muss ein Funkverfahren für Tore sicherheitsrelevante Daten in Echtzeit übertragen können, was in diesem Fall eine notwendige Reaktionszeit von weniger als 5 ms bedeutet.

Um den weltweit unterschiedlichen gesetzlichen Rahmenbedingungen zum Betrieb von Funksystemen gerecht zu werden, ist es für ein kostengünstiges Funkverfahren für Tore wichtig, dass das Funkverfahren ein Frequenzband nutzt, welches in nahezu allen Staaten für den lizenzfreien Betrieb von Funksystemen freigegeben ist. Hierdurch muss das Funkverfahren jedoch so ausgelegt sein, dass es auch in Koexistenz mit anderen Funkdiensten, die dasselbe Frequenzband verwenden, zuverlässig arbeitet.

Eine weitere Anforderung an ein Funksystem für Tore ist es, dass die benötigten Hardwarekomponenten möglichst preiswert sind und eine hohe Zuverlässigkeit für einen langjährigen Betrieb am Tor gewährleisten.

Aus dem Stand der Technik sind bereits einige Lösungen bekannt, bei denen beispielsweise ein batteriebetriebener Sender oder ein Sender/Empfänger an der Sicherheitsleiste eines Tores angeordnet ist und mit einer Torsteuerung unidirektional oder bidirektional über eine Funkstrecke kommunizieren kann.

Die DE 100 00 641 C1 beschreibt beispielsweise eine Vorrichtung für motorisch angetriebene Tore, bei der die Übermittlung der von der Sicherheitsleiste abgegebenen Messwerte per Funk an eine diese Funksignale empfangende stationäre Torsteuerung erfolgt. Zur Gewährleistung der notwendigen Sicherheit weist diese Vorrichtung zwei Sender auf, um die Informationen redundant auf verschiedenen Frequenzen zur Torsteuerung zu übertragen. Diese Vorrichtung hat jedoch die Nachteile, dass sie an der Sicherheitsleiste zwei unabhängige Sender benötigt, was aufwändig und teuer ist, und dass keine Möglichkeiten vorgesehen sind, wie sich die Sender auf eine andere Sendefrequenz einstellen, falls der von ihnen genutzte Sendekanal durch ein anderes Funksystem benutzt oder anderweitig gestört ist. Ferner weist diese Vorrichtung keine Merkmale auf, die gewährleisten, dass die Funksignale der Schutzvorrichtung nur von der ihr zugeordneten Torsteuerung verarbeitet werden.

Zum Stand der Technik (DE 103 02 812 B4) gehört auch eine Vorrichtung, die dadurch elektrische Energie spart, dass sie die mitfahrende Einheit zyklisch aufwachen lässt, um festzustellen, ob von der stationären Torsteuerung ein Signal messbar ist, welches darauf hindeutet, ob die stationäre Torsteuerung den weiteren Betrieb der mitfahrenden Einheit anfordert. Diese zum Stand der Technik gehörende Vorrichtung hat den Nachteil, dass die mitfahrende Einheit nicht unterscheiden kann, ob das empfangene Signal von der ihr zugeordneten Torsteuerung stammt oder von einem anderen Sender. Es kommt also leicht zum ungewollten Aktivieren der mitfahrenden Einheit, was die Batterielebensdauer negativ beeinflusst. Ferner findet sich auch in diesem Stand der Technik kein Hinweis darauf, wie ein zuverlässiger Betrieb gewährleistet werden soll, wenn sich weitere Funksysteme in ihrem Wirkungsbereich befinden.

Aus dem Stand der Technik (US 4,027,276 A) ist ein Funksystem für ein Tor bekannt, bei dem eine Empfangsvorrichtung in der Lage ist, die Signale mehrerer Sendevorrichtungen zu empfangen und zu separieren. Die Sendevorrichtung weist dazu Mittel auf, mit der ein 200 Megahertz-(MHz) bis 400 MHz-Sendesignal über eine elektronische Schaltung ein codiertes Signal in Form von Pulsen abgeben kann, und eine Empfangsvorrichtung, die die so codierten Signale empfangen kann und anhand der Codierung feststellen kann, von welcher Vorrichtung das Signal gesendet wurde. Diese zum Stand der Technik gehörende Vorrichtung hat den Nachteil, dass aufgrund der angegebenen Frequenzen und Codierung keine schnelle Datenübertragung erfolgen kann, und dass eine Kollision mehrerer Sendesignale, die gleichzeitig ausgesendet werden, von der Empfangsvorrichtung nicht separiert werden können, was einen Zusammenbruch der Datenübertragung zur Folge haben kann.

Ebenso gehört zum Stand der Technik (EP 1 722 339 A1) ein Verfahren, für das beschrieben ist, wie durch wechselseitiges Aussenden, Empfangen und Überprüfen von Identifikationsnummern zwischen einer stationären Einheit und einer mobilen Einheit sichergestellt werden kann, dass jeder Kommunikationspartner jeweils die für ihn bestimmte Information empfangen hat. Auch dieses Verfahren hat den Nachteil, dass keine Schritte vorgesehen sind, wie im Falle einer Kollision mehrerer Sender, die zeitgleich auf demselben Kanal senden, eine zuverlässige Kommunikation sichergestellt wird.

Zum Stand der Technik gehören ebenfalls die drei Funksysteme WLAN (Wireless Local Area Network), Bluetooth und ZigBee, die alle mit unterschiedlichen technischen Merkmalen im nahezu weltweit freigegebenen 2,4 Gigahertz (GHz) Frequenzband arbeiten.

WLAN, dessen Merkmale im Standard IEEE 802.11 spezifiziert sind und welches vorwiegend für die drahtlose Vernetzung von Personalcomputern mit Datenraten bis zu 54 Megabit pro Sekunde für eine schnelle Datenkommunikation über Entfernungen von bis zu 300 Metern spezifiziert ist, nutzt im Frequenzband zwischen 2,4 GHz bis 2,4835 GHz 11 beziehungsweise 13 statische, im Frequenzspektrum jedoch überlappende Kanäle. Von diesen Kanälen überlappen nur jeweils drei Kanäle nicht. In der Folge entsteht der Nachteil für die Nutzung in Funksystemen für Tore, dass in der Praxis nur drei WLAN-Netze parallel in unmittelbarer Umgebung betrieben werden können. Ferner haben WLAN-Funksysteme wegen ihrer hohen Sendeleistung und hohen Datenübertragungsrate eine hohe Stromaufnahme, und sie verwenden verhältnismäßig lange Steuerinformationen, so genannte Header in den Datenpaketen, was der geforderten schnellen Datenübertragung (kurze Reaktionszeit) und damit dem Einsatz als Funkverfahren für Tore negativ entgegensteht.

Das ebenfalls im 2,4 GHz-Frequenzband arbeitende Funksystem nach dem ZigBee-Standard ist für den Einsatz batterieloser Funkschalter und Funksensoren vorgesehen und soll eine lange Batterielebensdauer gewährleisten. ZigBee ist für Kurzstrecken (10 - 75 Meter) ausgelegt und basiert auf dem Standard IEEE 802.15.4. ZigBee nutzt innerhalb des 2,4 GHz-Frequenzbandes 25 statische Kanäle. Die Nachteile von ZigBee für ein Funkverfahren an Toren sind, dass nur eine relativ geringe Datenübertragungsgeschwindigkeit von maximal 250 Kilobit pro Sekunde erreicht und die Antwortzeiten ungefähr 5 Millisekunden (ms) betragen, was keine schnellen Reaktionen auf eine gefährliche Situation am Tor zulässt. Ferner können in ungestörter Umgebung maximal 16 ZigBee-Kanäle parallel betrieben werden, was wiederum eine Einschränkung bei großen Toranlagen, beispielsweise in einem Frachtzentrum zur Folge hat. Dadurch, dass ZigBee statische Kanäle verwendet, können mit ZigBee vernetzte Geräte nicht dynamisch auf einen Ausweichkanal wechseln, falls der voreingestellte Kanal durch ein anderes Funksystem, beispielsweise ein mobiles WLAN-Gerät gestört oder blockiert ist. Zwar sind auch für ZigBee Verfahren zur dynamischen Frequenzanpassungen geplant, jedoch sind diese für Reaktionszeiten von deutlich über 10 ms ausgelegt.

Für die Datenübertragung können bei ZigBee Protokollrahmen unterschiedlicher Länge zum Einsatz kommen. Ein Protokollrahmen nach dem ZigBee-Standard umfasst jedoch mindestens eine 8 Byte lange Adresse, eine 5 Byte lange Präambel und eine 2 Byte lange Prüfsumme und ist somit unabhängig von der zu übertragenden Nutzinformation mindestens 15 Byte lang. Dies hat den Nachteil, dass zur Übertragung kurzer Nutzinformationen von beispielsweise 1 Byte bis 4 Byte ein Mehrfaches an Übertragungszeit benötigt wird. Mit einer Netto-Datenrate von 250 KiloBit pro Sekunde (kbps) erfolgt die Datenübertragung in Relation zum genutzten Frequenzband zudem relativ langsam.

Mit dem ebenfalls zum Stand der Technik gehörenden Bluetooth-Standard, der in IEEE 802.15.1 spezifiziert ist und für die Funkvernetzung über kurze Distanz von mobilen Kleingeräten wie Mobiltelefonen und PDAs untereinander oder mit stationären Computern und Peripheriegeräten vorgesehen ist, kann mit einem 100-Milliwatt-Sender bis zu 100 Meter Reichweite erzielt werden. Bluetooth teilt das zur Verfügung stehende Frequenzband zwischen 2,402 GHz und 2,480 GHz in 79 Kanäle im 1-MHz-Abstand, zwischen denen es in einem festgelegten Frequenzsprungverfahren (Frequency Hopping) bis zu 1600 mal pro Sekunde, also alle 0,625 ms wechselt, wobei ein Frequenzsprung bereits innerhalb eines Kommunikationszyklus, also zwischen dem Ende der Datenhinübertragung und dem Anfang der Rückantwort ausgeführt wird. Für ein Funkverfahren an Toren hat Bluetooth die Nachteile, dass es wegen der schnellen Frequenzsprünge eine relativ hohe Prozessorleistung und damit einen hohen Strombedarf und teure Bauteile beansprucht, was einer langen Batterielebensdauer entgegensteht. Ferner kann der Zuordnungsprozess zwischen zwei Bluetooth-Kommunikationspartnern mehrere Sekunden dauern, was den Einsatz an einem Tor verhindert. Weiterhin kann nicht ausgeschlossen werden, dass Interaktionen mit anderen nicht dem Tor zugeordneten Bluetooth Geräten, beispielsweise Mobiltelefonen erfolgen, wenn diese sich im Erfassungsbereich fassungsbereich des Tores befinden. Hierfür sieht Bluetooth in der Version 2.0 zwar eine Möglichkeit zur Auswahl der vom Frequenzsprungverfahren genutzten Kanäle vor, wie beispielsweise das Blockieren einzelner Kanäle. Es ist aber nicht spezifiziert, nach welchen Kriterien diese Auswahl vorzunehmen ist.

Bei dem Bluetooth-Standard besteht ein Protokollrahmen mindestens aus 9 Byte Access Code, 7 Byte Header, 1 Byte Daten-Header und 2 Byte Prüfsumme. Unabhängig von der zu übertragenden Nutzinformation umfasst der Protokollrahmen somit mindestens 19 Byte und steht somit einer schnellen Datenübertragung von kurzen Nutzinformationen entgegen.

Ferner hat das Frequency-Hopping-Verfahren von Bluetooth und den anderen bekannten Funksystemen den Nachteil, dass diese Systeme die Frequenzsprünge nach einer intern festgelegten Reihenfolge oder dem Zufallsprinzip unbedingt ausführen und erst nach dem Frequenzsprung auf den nächsten Kanal überprüfen, ob der Kanal für eine eigene Datenübertragung überhaupt frei ist. Dies hat den Nachteil, dass diese Systeme unter Umständen für eine längere Zeitdauer von beispielsweise mehr als 100 ms keine Daten übertragen können, da sie permanent auf bereits belegte Kanäle springen. Hierdurch werden diese Systeme für den Einsatz zur Übertragung sicherheitsrelevanter Daten eines Tores und der damit verbundenen Forderung nach einer schnellen Reaktionszeit stark eingeschränkt.

Weiterhin gehört zum Stand der Technik (WO 03/056530 A1) ein Verfahren zum Übertragen von Signalen zwischen einer Master-Einheit und einer Slave-Einheit, wobei mehrere Funk-Kanäle zur Übertragung zur Verfügung stehen. Bei diesem zum Stand der Technik gehörenden Verfahren tastet eine Master-Einheit sämtliche der verfügbaren Kanäle ab, um einen freien Kanal zu finden. Ist ein Kanal nicht verfügbar, schreitet die Master-Einheit weiter zu einem nächsten Kanal. Diese Abfrage wird fortlaufend durchgeführt, bis ein freier Kanal gefunden wurde. Hat die Master-Einheit einen freien Kanal gefunden, sendet sie ein Signal aus, welches von einer Slave-Einheit ausgewertet werden kann. Die Slave-Einheit überprüft nacheinander auf allen verfügbaren Kanälen, ob sie das Signal einer Master-Einheit empfangen kann. Dieses zum Stand der Technik gehörende Verfahren weist den Nachteil auf, dass ständig alle verfügbaren Kanäle abgefragt werden müssen, um einen verfügbaren Kanal für die Übermittlung zu erfragen, was relativ lange dauert.

Zum Stand der Technik (EP 1 686 699 A2) gehört weiterhin eine Funkvorrichtung, mit der ein Frequenzsprungverfahren durchgeführt wird. Gemäß diesem Stand der Technik wird der jeweilige Kommunikationspartner darüber informiert, welcher Kanal benutzt werden soll. Hierzu wird vor jedem Kanalwechsel ermittelt, welcher Kanal günstig ist, und dieser Kanal wird dem Kommunikationspartner mitgeteilt. Diese zum Stand der Technik gehörende Funkvorrichtung weist den Nachteil auf, dass vor jedem Kanalwechsel ein Austausch über den jeweils zu verwendenden Kanal stattfindet, wodurch die Funkvorrichtung relativ langsam arbeitet.

Der vorliegenden Erfindung liegt das technische Problem zu Grunde, ein Funkverfahren für Tore anzugeben, welches die oben aufgeführten Anforderungen nach geringem Energiebedarf, schnellem und zuverlässigem Verbindungsaufbau (Synchronisation), schneller Datenübertragung, weltweit nutzbarem Frequenzband, sicherem Betrieb in Koexistenz mit anderen Funksystemen und dem Einsatz preiswerter und betriebssicherer Komponenten gleichermaßen erfüllt.

Dieses technische Problem wird durch ein Verfahren mit den Merkmalen gemäß Anspruch 1 gelöst.

Das erfindungsgemäße Funkverfahren für Tore im 2,4 GHz-Frequenzband mit einer Mehrzahl von Betriebskanälen, bei dem eine stationäre Einheit mittels einer drahtlosen Funkverbindung mit mindestens einer batteriebetriebenen mobilen Einheit bidirektional vernetzt ist und ein Frequenzsprungverfahren mit mehr als einem Kanal nutzt, bei dem
- Kanalsprünge in einem Zeitraster zwischen 0,625 ms und 10 ms ausgeführt werden,
- die für das Frequenzsprungverfahren verwendeten Kanäle adaptiv durch automatische oder manuelle Ermittlung und Einstellung der Betriebskanäle ausgewählt werden,
- mindestens ein vollständiger Kommunikationszyklus, der aus einer Datenhinübertragung und einer Rückantwort besteht, binnen des Zeitrasters auf einem Kanal erfolgt, und
- die Synchronisation für einen Verbindungsaufbau zwischen der stationären Einheit und der mobilen Einheit auf einem adaptiv vorbestimmten Synchronisationskanal erfolgt,
zeichnet sich dadurch aus, dass für die Synchronisation eine Mehrzahl von Synchronisationskanälen zur Verfügung steht, wobei jeder Synchronisationskanal eine eigene Priorität aufweist und ein Wechsel zu einem Synchronisationskanal mit niedriger Priorität nach einem fehlgeschlagenen Synchronisationsversuch auf einem Synchronisationskanal mit höherer Priorität erfolgt, und dass sich die Anzahl übertragener Daten an die notwendig zu übertragenden Nutzdaten anpasst.

Ein erster Vorteil des erfindungsgemäßen Funkverfahrens für Tore wird darin gesehen, dass das Funkverfahren im 2,4 GHz-Frequenzband auf den Frequenzen zwischen 2,402 GHz bis 2,480 GHz arbeitet, da dieses Frequenzband nahezu weltweit für Funksysteme zur Verfügung steht und eine hohe Datenrate von beispielsweise 1 Megabit pro Sekunde ermöglicht. Die Nutzung dieses Frequenzbandes hat zudem den Vorteil, dass hierfür eine Vielzahl von Standardbauteilen verfügbar sind, die die Realisierung eines preiswerten Funksystems ermöglichen.

Da das Funkverfahren für Tore für den Einsatz mit batteriebetriebenen mobilen Einheiten vorgesehen ist, die nur dann aktiviert werden, wenn deren Funktion notwendig ist, ist zudem erfindungsgemäß ein Verfahrensschritt zur schnellen Synchronisation einer mobilen Einheit mit einer stationären Einheit vorgesehen. Die schnelle Synchronisation hat den Vorteil, dass das Funkverfahren schnell betriebsbereit ist, und gleichzeitig wird hierdurch erreicht, dass nur wenig elektrische Energie notwendig ist. Zur Erzielung einer schnellen Synchronisation erfolgt eine Synchronisation auf mindestens einem adaptiv anpassbaren Synchronisationskanal.

Für einen Synchronisationsvorgang sendet die mobile Einheit erfindungsgemäß nach ihrer Aktivierung auf dem Synchronisationskanal ein Synchronisationssignal aus. Das Synchronisationssignal ist beispielsweise eine kurze Datensequenz, die eine eindeutige Kennung (Adresse) der mobilen Einheit enthält. Nach dem Aussenden des Synchronisationssignals wartet die mobile Einheit für eine vordefinierte Synchronisationswartezeit auf eine Rückantwort von einer stationären Einheit, die wiederum eine eindeutige Kennung (Adresse) der stationären Einheit enthält. Empfängt die mobile Einheit innerhalb der Synchronisationswartezeit eine entsprechende Rückantwort von der stationären Einheit, ist der Synchronisationsvorgang abgeschlossen und der normale Betriebsvorgang wird gestartet.

Ein Synchronisationsvorgang erfolgt binnen einer Zeit von wenigen Millisekunden (ms) und benötigt in jedem Fall weniger als 100 ms. Ein typischer Synchronisationsvorgang benötigt weniger als 30 ms.

In einer vorteilhaften Ausführungsform stehen für die Synchronisation mehr als ein Synchronisationskanal zur Verfügung, wobei jedem Synchronisationskanal eine eigene Priorität zugewiesen wird. Erhält die mobile Einheit binnen der Synchronisationswartezeit keine Rückantwort auf das von ihr gesendete Synchronisationssignal, wechselt die mobile Einheit gemäß der festgelegten Priorität auf den nächsten Synchronisationskanal und sendet hier erneut das Synchronisationssignal. Dieser Vorgang wird so lange weitergeführt, bis die mobile Einheit eine Rückantwort von der stationären Einheit erhält.

Als Synchronisationskanal werden vorteilhafterweise nur solche Kanäle verwendet, von denen eine gute Übertragungsqualität bekannt ist. Ein Synchronisationskanal kann gemäß einer weiteren Ausführungsform auch als Betriebskanal genutzt werden.

Die stationäre Einheit prüft in einem Zeitraster, welches kleiner als die Synchronisationswartezeit der mobilen Einheit ist, das Vorhandensein eines Synchronisationssignals einer ihr zugeordneten mobilen Einheit auf einem der für die Synchronisation vorgesehenen Kanäle. Dabei erfolgt die Abfrage bevorzugt auf dem Synchronisationskanal mit der höchsten Priorität. Empfängt die stationäre Einheit auf dem Synchronisationskanal mit der höchsten Priorität kein Synchronisationssignal oder stellt die stationäre Einheit fest, dass der Synchronisationskanal gestört ist, wechselt sie auf einen anderen Synchronisationskanal. Das von der stationären Einheit verwendete Zeitraster ist vorteilhaft so gewählt, dass es binnen der Synchronisationswartezeit alle Synchronisationskanäle durchlaufen kann.

Ferner ist erfindungsgemäß vorgesehen, ein Frequenzsprungverfahren anzuwenden, wobei die von dem Funkverfahren genutzten Betriebskanäle adaptiv neu bestimmt werden, um möglichst nur zwischen solchen Kanälen zu wechseln, die zuvor als freie Kanäle erkannt wurden. Unter dem Begriff "adaptiv" wird in diesem Zusammenhang die automatische oder manuelle Ermittlung und Einstellung von Betriebskanälen verstanden.

Die Kanalsprünge können anhand einer Kanalsprungtabelle oder anhand eines Kanalsprungalgorithmus erfolgen, der die Kanalsprungtabelle berücksichtigt. Die Kanalsprünge werden dabei von der mobilen Einheit und der stationären Einheit synchron, also zeitgleich ausgeführt. Der Kanalsprung zwischen den Betriebskanälen erfolgt nach einem für beide Kommunikationseinheiten identischen Zeitraster, welches vorteilhaft kürzer als 10 ms ist. Innerhalb dieses Zeitrasters erfolgt ein vollständiger Kommunikationszyklus, der aus einer Datenhinübertragung und einer Rückantwort besteht, so dass der Kanalsprung erst nach Abschluss eines Kommunikationszyklus ausgeführt wird, was die Vorteile hat, dass nur eine geringe Logik und Rechenleistung notwendig ist, womit das Kanalsprungverfahren mit preiswerten Komponenten ausführbar ist, und es nur wenig elektrische Energie benötigt.

Ein vollständiger Kommunikationszyklus kann beispielsweise ein Datentelegramm einer ersten Kommunikationseinheit mit einer kurzen Statusinformation über den Status der Sicherheitsleiste des Tores sein und eine kurze Quittung der zweiten Kommunikationseinheit, mit der der fehlerfreie Empfang des Datentelegramms bestätigt wird.

Damit das erfindungsgemäße Funkverfahren für Tore schnell ist und damit nur wenig elektrische Energie benötigt und zudem eine schnelle Übertragung sicherheitsrelevanter Daten gewährleistet, ist der Einsatz kurzer Datenpakete vorgesehen, die jeweils nur eine solche Länge an Nutzdaten aufweisen, wie sie für die jeweils zu übertragende Information notwendig ist. Die übertragbare Nutzinformation ist vorteilhaft auf 32 Byte begrenzt.

Für den normalen Einsatz eines Funkverfahrens für Tore ist es ausreichend, wenige Byte Nutzinformation zu übertragen. Diese Nutzinformation beinhaltet beispielsweise eine binäre Statusinformation darüber, ob eine Sicherheitseinrichtung am Tor ein Hindernis erkannt hat oder ein anderer Kontakt geöffnet oder geschlossen ist oder beispielsweise die aktuelle Position der Torkante.

Weiterhin werden bei dem Funkverfahren für Tore vorteilhaft die Nutzdaten nur mit einem geringen Protokollrahmen übertragen, der nur solche Protokollelemente enthält, die zur Durchführung eines Funkverfahrens für Tore benötigt werden. Neben einer 2 Byte langen Präambel, einer 5 Byte langen Adresse und einer 1 Byte langen Transceiver-Information besteht der Protokollrahmen aus einer 2 Byte langen Prüfsumme und weist somit eine Gesamtlänge von 10 Byte auf.

Der Einsatz des Frequenzsprungverfahrens im 2,4 GHz-Frequenzband ermöglicht dem Funkverfahren für Tore zudem den nahezu weltweiten Einsatz. Ein weiterer Vorteil des Frequenzsprungverfahrens ist, dass das Funkverfahren hierdurch eine höhere Betriebssicherheit erzielt, da durch den zyklischen Kanalwechsel die Wahrscheinlichkeit sinkt, dass ein anderes Funksystem oder eine andere Störgröße das Funkverfahren für einen längeren Zeitraum stört beziehungsweise die Datenübertragung unmöglich macht. Dieser Vorteil wird durch die adaptive Auswahl der verwendeten Kanäle noch weiter verbessert, da durch die Auswahl und Nutzung der zuvor als frei erkannten Kanäle eine mögliche Störung des Funkverfahrens bereits im Vorfeld minimiert wird.

### LEERSEITE

Besonders vorteilhaft ist es, wenn das Funkverfahren für Tore mindestens 79 Kanäle nutzt, weil es hierdurch ermöglicht wird, dass auch beim Parallelbetrieb mehrerer gleichartiger Funksysteme für jedes Funksystem eine ausreichende Anzahl freier Kanäle zur Verfügung steht. Ferner hat diese Kanalanzahl den Vorteil, dass die Kanäle relativ schmal sind, was den Vorteil hat, dass sich leicht freie Kanäle finden lassen.

In einer vorteilhaften Ausführungsform liegt zwischen der Frequenz eines ersten verwendeten Kanals und der Frequenz, die nach einem Kanalsprung angesprungen wird, eine Differenz von mindestens 25 MHz. Dies hat den Vorteil, dass mit einem Kanalsprung ein in demselben Frequenzband arbeitendes WLAN-System sicher übersprungen wird beziehungsweise mit einem Kanalsprung der Frequenzbereich eines störenden WLAN-Systems sicher verlassen werden kann.

Die Auswahl des Kanals, der als nächster angesprungen wird, kann durch die Bestimmung einer Pseudozufallszahl erfolgen, in deren Berechnung die individuelle Adresse der stationären Einheit einbezogen wird. Hierdurch wird erreicht, dass sich die Pseudozufallszahl einer ersten stationären Einheit mit hoher Wahrscheinlichkeit von der Pseudozufallszahl einer zweiten stationären Einheit unterscheidet, da die Bildung einer Pseudozufallszahl häufig auf Basis eines internen Timers gebildet wird, der unter ungünstigen Umständen bei mehreren stationären Einheiten synchron laufen kann.

Dieses hat den Vorteil, dass zwei nebeneinander betriebene Funksysteme nicht Gefahr laufen, jeweils synchron auf dieselben Kanäle zu wechseln und sich damit gegenseitig zu stören.

Eine weitere Möglichkeit besteht darin, dass die erste Kommunikationseinheit binnen einer definierten Antwortzeit gar keine oder keine positive Quittung von der zweiten Kommunikationseinheit erhält, vorgesehen, dass die erste Kommunikationseinheit ihr Datentelegramm ein weiteres Mal auf demselben Kanal an die zweiten Kommunikationseinheit sendet. Erst wenn die erste Kommunikationseinheit auch auf das zweite Datentelegramm keine oder keine positive Quittung erhält, wechselt sie gemäß eines für alle Kommunikationseinheiten einheitlich festgelegten Verfahrens ihren Kanal und versucht, das Datentelegramm auf dem neu gewählten Kanal an die zweite Kommunikationseinheit erneut zu senden. Dies hat den Vorteil einer weiteren Reduzierung der Systemreaktionszeiten auf mögliche Übertragungsfehler.

Besonders vorteilhaft ist das Zeitraster, nach dem ein Kanalsprung ausgeführt wird, kleiner oder gleich 2,5 ms. Dies hat den Vorteil, dass ein Kommunikationszyklus schnell ausgeführt wird und damit eine schnelle Reaktionszeit des Gesamtsystems garantiert werden kann. Ferner kann ein zweiter Übertragungsversuch auf einem weiteren Kanal binnen einer Zeit von 5 ms durchgeführt werden, was zur Einhaltung notwendiger Reaktionszeiten auf gefährliche Situationen am Tor eine vorteilhafte Zeitspanne darstellt.

Ferner können jedem Funksystem für Tore bestimmte Kanäle zur Übertragung sicherheitsrelevanter Daten zugeordnet werden. Damit wird verhindert, dass bei der Übertragung sicherheitsrelevanter Daten Kanalkollisionen zwischen Funksystemen für Tore auftreten können, falls diese sich in räumlicher Nähe zueinander befinden. Während der Übertragung sicherheitsrelevanter Daten erfolgen Kanalsprünge jeweils nur auf diese Untergruppe von Kanälen, die sich mit anderen Funksystemen für Tore nicht überschneiden.

Zur adaptiven Auswahl der Betriebskanäle kann die kanalbezogene Übertragungsqualität der verfügbaren Betriebskanäle geprüft und in einer Kanalbelegungstabelle abgelegt werden. Die Erstellung der Kanalbelegungstabelle kann durch die stationäre Einheit oder durch die mobile Einheit oder durch beide Einheiten erfolgen. Diese Kanalbelegungstabelle wird dann zwischen der stationären Einheit und der mobilen Einheit ausgetauscht, so dass beide Einheiten mit einer identischen Kanalbelegungstabelle arbeitet.

Wurde die Kanalbelegungstabelle durch beide Einheiten erstellt und zwischen den Einheiten ausgetauscht, ist vorteilhafterweise vorgesehen, dass beide Einheiten nur die Kanäle verwenden, die von beiden Einheiten als Kanäle mit guter Übertragungsqualität ermittelt wurden.

Es ist möglich, dass die Kanalbelegungstabelle zyklisch in einem vorbestimmten Zeitraster neu erstellt wird.

Gemäß einer weiteren Möglichkeit wird der Zeitpunkt, zu dem die Kanalbelegungstabelle neu erzeugt wird, durch ein Ereignis ausgelöst. Ein solches Ereignis kann beispielsweise das Ende einer Torbewegung oder die Torbewegung selbst sein. Ein Ereignis kann aber auch das Ende eines Kommunikationszyklus sein. Die ereignisabhängige Erzeugung der Kanalbelegungstabelle hat den Vorteil, dass zu diesem Zeitpunkt sichergestellt ist, dass beide Kommunikationseinheiten aktiv sind und miteinander kommunizieren können und keine zeitkritische Übertragung sicherheitsrelevanter Daten erfolgen muss.

Eine weitere Möglichkeit sieht vor, dass die Kanalbelegungstabelle durch einen manuellen Eingriff eines Benutzers, beispielsweise bei der Installation des Tores oder im Bedarfsfalle ausgeführt wird. Diese Ausführungsform hat den Vorteil, dass die Vorrichtungen, die das Funkverfahren für Tore ausführen, keine Erfassungsvorrichtungen zur Ermittlung der kanalbezogenen Übertragungsqualität benötigen, und es bietet den Vorteil, dass die ausführende Person die Richtigkeit der vorgenommenen Einstellungen kontrollieren kann.

Für die Ermittlung der kanalbezogenen Übertragungsqualität können mehrere voneinander unabhängige Verfahren angewandt werden, von denen entweder nur eines eingesetzt wird, die aber auch in Kombination einsetzbar sind.

Eine erste Möglichkeit besteht darin, die Ermittlung der kanalbezogenen Übertragungsqualität durch Messung der Signalfeldstärke, mit der ein Sendesignal der jeweils anderen Einheit auf den einzelnen Kanälen empfangen werden kann. Dies hat den Vorteil, dass sehr präzise Aussagen zur möglichen Übertragungsqualität möglich sind.

Gemäß einer anderen Variante kann die Ermittlung der kanalbezogenen Übertragungsqualität dadurch erfolgen, dass auf einem Kanal mehrere Testübertragungen mit einer jeweils anderen Sendeleistung durchgeführt werden. Die benötigte Sendeleistung stellt das Kriterium für die kanalbezogene Übertragungsqualität dar. Dieses Verfahren hat den Vorteil, dass die jeweils empfangende Station keine Messvorrichtung zur Ermittlung der Signalfeldstärke benötigt, sondern nur eine digitale Information darüber, ob eine Übertragung möglich ist oder nicht möglich ist, ermittelt werden muss.

Gemäß einer weiteren Möglichkeit erfolgt die Ermittlung der kanalbezogenen Übertragungsqualität anhand der auf dem jeweiligen Kanal empfangenen Störfeldstärke, die durch andere Sendesysteme auf dem Kanal verursacht werden. Dies hat den Vorteil, dass die Ermittlung der kanalbezogenen Übertragungsqualität ohne Zutun der jeweils anderen Einheit durchführbar ist.

Gemäß einer anderen Möglichkeit erfolgt die Ermittlung der kanalbezogenen Übertragungsqualität durch kanalbezogenes Zählen von Übertragungsfehlern, beispielsweise innerhalb einer bestimmten Zeitspanne. Je häufiger auf einem Kanal Übertragungsfehler registriert werden, umso schlechter ist die Übertragungsqualität auf dem jeweiligen Kanal. Dieses Verfahren hat den Vorteil, dass es relativ einfach und preiswert durch Software realisierbar ist.

Zur weiteren Reduzierung des Energiebedarfs des Funkverfahrens für Tore ist es vorgesehen, die Kommunikationshäufigkeit situationsbedingt anzupassen. Dies bedeutet, dass in Situationen, in denen keine sicherheitsrelevanten Daten ausgetauscht werden müssen, weniger häufig Kommunikationen stattfinden als in Situationen, in denen sicherheitsrelevante Daten ausgetauscht werden müssen. Dazu kann die stationäre Einheit der mobilen Einheit die benötigte Kommunikationshäufigkeit übermitteln.

Eine weitere Reduzierung des Energiebedarfs des Funkverfahrens für Tore kann dadurch erfolgen, dass die mobile Einheit oder zumindest Teile der mobilen Einheit situationsbedingt in einen Modus versetzt werden, in dem sie weniger Energie verbrauchen. Dies kann beispielsweise dadurch erfolgen, dass der oder die Prozessoren, die das Funkverfahren für Tore ausführen, mit unterschiedlichen Taktfrequenzen betrieben werden können und die maximale Taktfrequenz nur dann aktiviert wird, wenn sicherheitsrelevante Daten zu übertragen sind. Eine andere Möglichkeit ist das Deaktivieren der Sender/Empfänger, die zur Durchführung des Verfahrens verwendet werden.

Das erfindungsgemäße Funkverfahren betrifft also ein schnelles sowie Energie sparendes und zuverlässiges sowie weltweit einsetzbares Funkverfahren zur drahtlosen Vernetzung einer stationären Torsteuerung zur Steuerung motorisch angetriebener Tore mit einer Mehrzahl mobiler Einheiten der Torsteuerung. Das Funkverfahren ist besonders dazu geeignet, Komponenten, die an einem beweglichen Torflügel angebracht sind, wie beispielsweise Sensoren, die einen Zusammenstoß des Torflügels mit einem Hindernis detektieren und unter dem Begriff der Sicherheitsleisten bekannt sind, Überwachungskontakte von Schlupftüren oder so genannte Crash-Sensoren, drahtlos mit der stationären Torsteuerung zu vernetzen.

Das erfindungsgemäße Funkverfahren für Tore ist besonders geeignet für so genannte Schnelllauftore, kann aber gleichermaßen auch für alle anderen bekannten motorisch angetriebenen Tore und Schranken verwendet werden.

Weitere Merkmale und Vorteile der Erfindung ergeben sich anhand der zugehörigen Zeichnung, in der ein Tor und eine Kanalbelegung nur beispielhaft dargestellt sind. In der Zeichnung zeigen:
- Fig. 1: eine schematische Darstellung eines Tores;
- Fig. 2: ein von unterschiedlichen Funksystemen genutztes Frequenzband;
- Fig. 3: eine Kanalbelegungstabelle

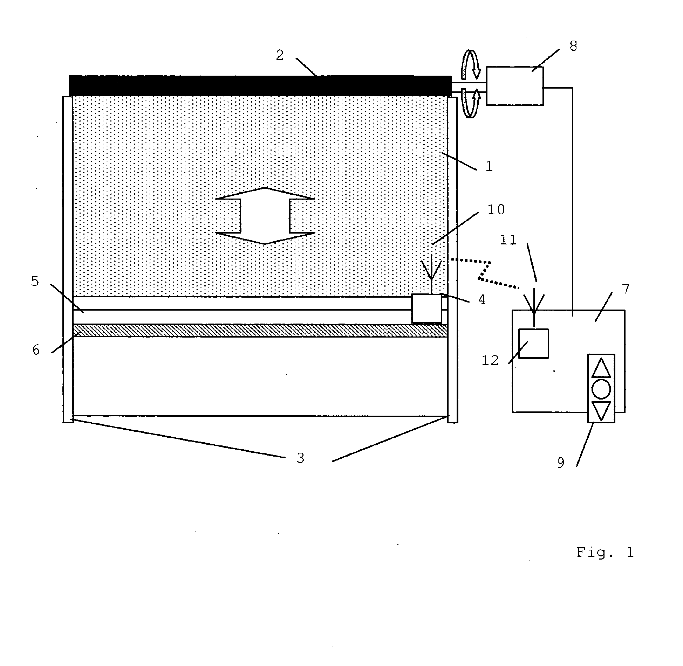

Fig. 1 zeigt ein mögliches Einsatzgebiet des Funkverfahrens für Tore am Beispiel eines Tores 1, welches in Führungsschienen 3 geführt ist und über eine Torwelle 2 mit einem Torantrieb 8 bewegbar ist. Bei dem dargestellten Tor handelt es sich um ein Wickeltor, bei dem das Tor 1 während der Aufbewegung um die Torwelle 2 gewickelt wird. Der Torantrieb 8 wird dabei durch eine ortsfeste Torsteuerung 7 gesteuert, die über Bedienelemente 9 befehligt werden kann. Die ortsfeste Torsteuerung 7 beinhaltet zudem eine stationäre Einheit 12, die über eine Antenne 11 mit einer am Tor angeordneten Antenne 10, die mit einer batteriebetriebenen mobilen Einheit 4 in Kontakt steht, drahtlos kommunizieren kann. An einer Unterkante des Tores 1 befindet sich ein Abschlussprofil 5, welches dem Tor 1 Stabilität verleiht. An der Unterkante des Abschlussprofiles 5 ist ein Sicherheitssensor 6 montiert, der beispielsweise als Lichtschranke oder elektrischer Kontakt oder als pneumatisches Schaltelement ausgebildet sein kann, und der mittels der mobilen Einheit 4, den Antennen 10 und 11 und der stationären Einheit 12 Informationen zwischen dem Sicherheitssensor 6 und der ortsfesten Torsteuerung 7 auf drahtlosem Weg austauschen kann.

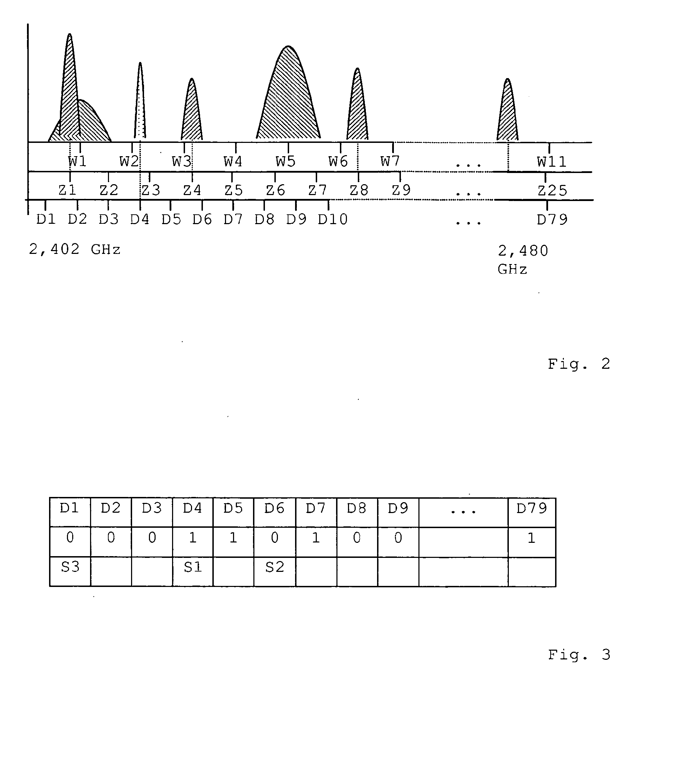

Fig. 2 zeigt schematisch ein Frequenzband, welches von unterschiedlichen Funksystemen verwendet wird. In diesem Beispiel arbeitet ein mit dem Buchstaben W gekennzeichnetes Funksystem auf den Kanälen W1 und W5. Die Kanäle des mit W gekennzeichnete Funksystems verwenden dabei eine verhältnismäßig große Kanalbandbreite. Bei dem mit W gekennzeichneten Funksystem kann es sich beispielsweise um ein WLAN-System handeln, bei dem viele Daten in kurzer Zeit übertragen werden können, was eine große Kanalbandbreite voraussetzt.

Ferner arbeitet auf dem dargestellten Frequenzband ein weiteres mit dem Buchstaben Z bezeichnetes Funksystem, dessen Kanäle gegenüber dem mit W gekennzeichneten Funksystem eine geringere Kanalbandbreite aufweisen. Hierdurch ist es prinzipiell möglich, dass mehrere mit Z gekennzeichnete Funksysteme auf demselben Frequenzband arbeiten.

An der Stelle W1/Z1 überlagern sich allerdings die Sender der beiden Funksysteme W und Z, was in der Praxis zu einer deutlichen Verminderung der Übertragungsqualität oder zu einem Zusammenbruch der Datenübertragung der so kollidierenden Funksysteme führen kann.

Ferner zeigt Fig. 2 noch ein mit D gekennzeichnetes Funksystem, bei dem es sich um das erfindungsgemäße Funksystem für Tore handelt und welches eine nochmals geringere Kanalbandbreite gegenüber dem Funksystem Z aufweist.

Durch die geringe Kanalbandbreite des erfindungsgemäßen Funksystems D besteht die Möglichkeit, dass eine Vielzahl gleichartiger Funksysteme dasselbe Frequenzband nutzen können, ohne sich gegenseitig zu beeinflussen, und es hat den Vorteil, dass die Wahrscheinlichkeit, dass einer der Kanäle D1 bis Dn frei ist, also nicht durch ein anderes Funksystem verwendet wird, höher ist.

Erfindungsgemäß ist vorgesehen, dass mindestens die stationäre Einheit 12 zyklisch, beispielsweise in einem festen Zeitraster oder aufgrund eines externen Ereignisses oder beispielsweise im Anschluss an eine Kommunikation zwischen stationärer Einheit 12 und mobiler Einheit 4, das gesamte Frequenzband dahingehend analysiert, ob und mit welcher Signalstärke andere Funksysteme auf demselben Frequenzband arbeiten.

Das Ergebnis dieser Analyse speichert die stationäre Einheit 12 in einer Kanalbelegungstabelle, wie sie in Fig. 3 beispielhaft dargestellt ist. In der in Fig. 3 dargestellten Kanalbelegungstabelle sind die Kanäle, die gemäß Fig. 2 als freie Kanäle erkannt wurden, mit einer "1" gekennzeichnet, während von anderen Systemen belegte Kanäle mit einer "0" gekennzeichnet sind.

Ferner enthält die Kanalbelegungstabelle in Fig. 3 eine weitere Zeile, in der die Synchronisationskanäle eingetragen sind. Die Synchronisationskanäle sind mit S1, S2 und S3 gekennzeichnet, wobei dies nur beispielhaft eine mögliche Anzahl von Synchronisationskanälen darstellt. Der mit S1 gekennzeichnete Synchronisationskanal hat dabei die höchste Priorität für einen Synchronisationsvorgang zwischen der stationären Einheit 12 und der mobilen Einheit 4. Die Synchronisationskanäle S2 und S3 folgen in ihrer Priorität gemäß ihrer Nummernreihenfolge.

Nachdem die ortsfeste Einheit 12 die Kanalbelegungstabelle erstellt hat, überträgt sie diese zur mobilen Einheit 4, wo sie abgespeichert wird.

Für das Frequenzsprungverfahren bei der Kommunikation zwischen ortsfester Einheit 12 und mobiler Einheit 4 wird dann diese jeweils adaptiv neu erstellte Kanalbelegungstabelle verwendet.

Dadurch, dass die Datentelegramme nur eine geringe Länge (geringer Dateninhalt) aufweisen und dadurch, dass die Häufigkeit der Frequenzsprünge eingeschränkt ist, weil ein kompletter Kommunikationszyklus inklusive wenigstens einer möglichen Wiederholung ohne Frequenzsprung ausgeführt wird, ist das erfindungsgemäße Funkverfahren für Tore sehr Batterie sparend und gleichzeitig schnell. Durch die Adaptivität, die durch die jeweils neu ermittelte Frequenzbelegungstabelle erreicht wird, und die Definition priorisierter Synchronisationskanäle ist das Funkverfahren zudem sehr betriebssicher und gleichzeitig schnell und erfüllt damit die wesentlichen Anforderungen an ein Funkverfahren für Tore.

### Bezugszahlen

- 1: Tor
- 2: Torwelle
- 3: Führungsschienen
- 4: mobile Einheit
- 5: Abschlussprofil
- 6: Sicherheitssensor
- 7: Torsteuerung
- 8: Torantrieb
- 9: Bedienelemente
- 10, 11: Antenne
- 12: stationäre Einheit
- D: Funksystem
- D1 bis Dn: Kanäle
- S1, S2, S3: Synchronisationskanäle
- W: Funksystem
- W1: Kanal
- W5: Kanal
- Z: Funksystem

## Patentansprüche

1. Funkverfahren für Tore im 2,4 GHz-Frequenzband mit einer Mehrzahl von Betriebskanälen, bei dem eine stationäre Einheit mittels einer drahtlosen Funkverbindung mit mindestens einer batteriebetriebenen mobilen Einheit bidirektional vernetzt ist und ein Frequenzsprungverfahren mit mehr als einem Kanal nutzt, bei dem
- Kanalsprünge in einem Zeitraster zwischen 0,625 ms und 10 ms ausgeführt werden,
- die für das Frequenzsprungverfahren verwendeten Kanäle (D1 bis Dn) adaptiv durch automatische oder manuelle Ermittlung und Einstellung der Betriebskanäle ausgewählt werden,
- mindestens ein vollständiger Kommunikationszyklus, der aus einer Datenhinübertragung und einer Rückantwort besteht, binnen des Zeitrasters auf einem Kanal (D1 bis Dn) erfolgt,
- die Synchronisation für einen Verbindungsaufbau zwischen der stationären Einheit (12) und der mobilen Einheit (4) auf einem adaptiv vorbestimmten Synchronisationskanal (S1, S2, S3) erfolgt,
**dadurch gekennzeichnet, dass** für die Synchronisation eine Mehrzahl von Synchronisationskanälen (S1, S2, S3) zur Verfügung steht, wobei jeder Synchronisationskanal (S1, S2, S3) eine eigene Priorität aufweist und ein Wechsel zu einem Synchronisationskanal (S2, S3) mit niedriger Priorität nach einem fehlgeschlagenen Synchronisationsversuch auf einem Synchronisationskanal (S1, S2) mit höherer Priorität erfolgt, und dass sich die Anzahl übertragener Daten an die notwendig zu übertragenden Nutzdaten anpasst.

2. Funkverfahren für Tore nach Anspruch 1, **dadurch gekennzeichnet, dass** zur Synchronisation adaptiv durch automatische oder manuelle Ermittlung und Einstellung von Betriebskanälen nur solche Kanäle (S1, S2, S3) verwendet werden, von denen eine gute Übertragungsqualität bekannt ist.

3. Funkverfahren für Tore nach Anspruch 1, **dadurch gekennzeichnet, dass** die stationäre Einheit (12) das Vorhandensein eines Synchronisationssignals auf allen Synchronisationskanälen (S1, S2, S3) während der Synchronisationswartezeit einer mobilen Einheit (4) untersucht.

4. Funkverfahren für Tore nach Anspruch 1, **dadurch gekennzeichnet, dass** das Frequenzband in mindestens 79 Kanäle unterteilt ist.

5. Funkverfahren für Tore nach Anspruch 1, **dadurch gekennzeichnet, dass** ein Kanalsprung zwischen einem ersten und einem zweiten Kanal (D1 bis Dn) einem Frequenzsprung von mindestens 25 MHz entspricht.

## Claims

1. Radio method for doors in the 2.4 GHz frequency band with a plurality of operating channels, wherein a stationary unit is bidirectionally networked by means of a wireless radio connection with at least one battery-powered mobile unit and uses a frequency-hopping method with more than one channel, wherein
- channel hops are executed in a time-slot pattern of between 0.625 ms and 10 ms,
- the channels (D1 to Dn) used for the frequency-hopping method are adaptively selected by automatic or manual determination and setting of the operating channels,
- at least one complete communication cycle comprising an incoming data transmission and a response takes place on one channel (D1 to Dn) within the time-slot pattern,
- the synchronisation for the establishment of a connection between the stationary unit (12) and the mobile unit (4) takes place on an adaptively predetermined synchronisation channel (S1, S2, S3),
**characterised in that** a plurality of synchronisation channels (S1, S2, S3) are available for the synchronisation, each synchronisation channel (S1, S2, S3) having its own priority, and a change to a synchronisation channel (S2, S3) with lower priority taking place after a failed synchronisation attempt on a synchronisation channel (S1, S2) with higher priority, and **in that** the number of transmitted data is adapted to the useful data that must be transmitted.

2. Radio method for doors according to Claim 1, **characterised in that** only those channels (S1, S2, S3) known to have good transmission quality are used for the synchronisation adaptively by automatic or manual determination and setting of operating channels.

3. Radio method for doors according to Claim 1, **characterised in that** the stationary unit (12) checks for the presence of a synchronisation signal on all synchronisation channels (S1, S2, S3) during the synchronisation waiting time of a mobile unit (4).

4. Radio method for doors according to Claim 1, **characterised in that** the frequency band is divided into at least 79 channels.

5. Radio method for doors according to Claim 1, **characterised in that** a channel hop between a first and a second channel (D1 to Dn) corresponds to a frequency hop of at least 25 MHz.

## Revendications

1. Procédé à communication radio pour portails dans la bande de fréquences 2,4 GHz utilisant une pluralité de canaux de fonctionnement, dans lequel une unité stationnaire est en relation bidirectionnelle, par une liaison hertzienne sans fil, avec au moins une unité mobile alimentée par batterie, mettant en oeuvre un procédé à sauts de fréquence avec un ou plusieurs canaux, dans lequel
- des sauts de canal sont réalisés dans une trame temporelle d'entre 0,625 ms et 10 ms,
- les canaux utilisés pour le procédé à sauts de fréquence (D1 à Dn) sont sélectionnés de façon adaptative par fourniture et réglage automatique ou manuel des canaux de fonctionnement,
- au moins un cycle de communication complet composé d'une transmission en entrée de données et une réponse en retour est réalisée à l'intérieur de la trame temporelle sur un canal (D1 à Dn),
- la synchronisation pour la mise en place d'une liaison entre l'unité stationnaire (12) et l'unité mobile (4) se produit sur un canal de synchronisation (S1, S2, S3) prédéterminé de façon adaptative,
**caractérisé en ce que** une pluralité de canaux de synchronisation (S1, S2, S3) sont disponibles pour la synchronisation, dans lequel chaque canal de synchronisation (S1, S2, S3) présente sa propre priorité et le passage sur un canal de synchronisation (S2, S3) avec une priorité plus faible est réalisé suite à une tentative infructueuse de synchronisation sur un canal de synchronisation (S1, S2) de priorité plus élevée, et **en ce que** la quantité de données transférée est adaptée aux données d'exploitation qu'il est nécessaire de transférer.

2. Procédé à communication radio pour portails selon la revendication 1, **caractérisé en ce que** on n'utilise que des canaux (S1, S2, S3) pour la synchronisation adaptative par fourniture et réglage automatique ou manuelle de canaux de fonctionnement qui sont connus comme présentant une bonne qualité de transmission.

3. Procédé à communication radio pour portails selon la revendication 1, **caractérisé en ce que** l'unité stationnaire (12) recherche la présence d'un signal de synchronisation sur tous les canaux de synchronisation (S1, S2, S3) pendant le temps d'attente de synchronisation d'unités mobiles (4).

4. Procédé à communication radio pour portails selon la revendication 1, **caractérisé en ce que** la bande de fréquences est divisée en au moins 79 canaux.

5. Procédé à communication radio pour portails selon la revendication 1, **caractérisé en ce qu'**un saut de canal entre un premier et un deuxième canal (D1 à Dn) correspond à un saut de fréquence d'au moins 25 MHz.
